# EUROPEAN PATENT APPLICATION

(11) **EP 4 397 539 A1**
(43) Date of publication of application: **10.07.2024**
(21) Application number: 23150251.9
(22) Date of filing: 04.01.2023
(51) Int. Cl.: B60P 1/16, E02F 9/20

(54) **A COMPUTER IMPLEMENTED METHOD FOR CONTROLLING A DUMPING PROCEDURE**

(71) Applicant: Volvo Construction Equipment AB, 631 85 Eskilstuna (SE)
(72) Inventor: KVIST, Roland, 360 42 BRAÅS (SE); EKMAN, Gordon, 342 63 MOHEDA (SE); ÖRKENRUD, Kim, 352 64 VÄXJÖ (SE)
(74) Representative: Kransell & Wennborg KB

(57) **Abstract**

A computer system comprising a processor device configured to:
- initiate a dumping procedure of a load by tilting a dump body of a working machine by activating at least one tilting actuator connecting a working machine frame with the dump body,
- determine that the dumping procedure has reached a pre-defined state at which a sub-part of the load is maintained in the dump body,
- instruct the working machine to move in a forward direction to discharge at least a portion of said sub-part of the load maintained in the dump body.

## Description

### TECHNICAL FIELD

The disclosure relates generally to working machines and automated dumping procedures of working machines. In particular aspects, the disclosure relates to a computer implemented method for controlling a dumping procedure of a working machine. The disclosure can be applied in heavy-duty vehicles, such as trucks, buses, and construction equipment. Although the disclosure may be described with respect to a particular vehicle, the disclosure is not restricted to any particular vehicle.

### BACKGROUND

In the field of construction equipment there are a number of different working machines used to move, haul or dig material such as soil, gravel, rocks etcetera.

In connection with transportation of heavy loads, e.g. in contracting work, dump vehicles of the type of articulated haulers (also called frame-steered vehicles or dumpers) are frequently used. Such vehicles may be operated with large and heavy loads in areas where there are no roads, for example for transports in connection with road or tunnel building, sand pits, mines and similar environments.

A dumper, or a dump vehicle, comprises a frame, a tiltably arranged dump body for carrying loads, and wheel axles supported by the frame. The dump body is often known as a receptacle, container, or the like. When dumping a load from the dump body, the dumb body is tilted whereby the load is discharged by sliding off the bottom and over an edge of the dump body. However, there may be parts of the load remained in the dump body after the tilting of the dump body, even if the dump body is tilted to its maximum limit. Thus, there is a need in the industry for an improved control of the dumping procedure.

### SUMMARY

According to a first aspect of the disclosure, computer system comprising a processor device is provided. The processor device is configured to:
- initiate a dumping procedure of a load by tilting a dump body of a working machine by activating at least one tilting actuator connecting a working machine frame with the dump body,
- determine that the dumping procedure has reached a pre-defined state at which a sub-part of the load is maintained in the dump body,
- instruct the working machine to move in a forward direction to discharge at least a portion of said sub-part of the load maintained in the dump body.

The first aspect of the disclosure may seek to overcome problems relating to maintained, or remained, parts of the load in the dump body after a dumping procedure, e.g. after an automated dumping procedure. A technical benefit may include an improved dumping procedure with less, or no, parts of the load maintained, or remained in the dump body. By providing a processor device configured to determine that the dumping procedure has reached the pre-defined state, and subsequently instruct the working machine to move in a forward direction, at least a portion of the sub-part, e.g. the whole of said sub-part, of the load maintained in the dump body will be discharged as a result of the induced forced by the forward motion of the working machine. That is, a larger amount of the load in the dump body can be discharged in an efficient manner as the processor device determines that the dumping procedure has reached a pre-defined state, and in response to that the dumping procedure has reached the pre-defined state, instruct the working machine to move in a forward direction. The processor device may be configured to verify that working machine moves in the forward direction as instructed. The first aspect of the disclosure may provide efficient and automated dumping procedure of the working machine. The dumping procedure may be referred to an automated dumping procedure, or an automated dumping procedure to discharge a load from the dump body.

A technical benefit of the first aspect of the disclosure, may include that the load in the dump body can be discharged in an advantageous manner. That is, as the activation of the at least one tilting actuator initiates the dumping procedure by tilting the dump body relative to the working machine frame, a pre-defined state of the dumping procedure can be reached in which a sub-part of the load is maintained in the dump body, whereafter the working machine is moved in a forward direction to discharge at least a portion of said sub-part of the load maintained in the dump body.

According to a second aspect of the disclosure, a computer-implemented method is provided. The method comprises:
- initiating, by a processor device of a computer system, a dumping procedure of a load by tilting a dump body of a working machine by activating at least one tilting actuator connecting a working machine frame with the dump body,
- determining, by the processor device, that the dumping procedure has reached a predefined state at which a sub-part of the load is maintained in the dump body,
- instructing, by the processor device, the working machine to move in a forward direction to discharge at least a portion of said sub-part of the load maintained in the dump body.

The second aspect of the disclosure may seek to solve the same problem as described for the first aspect of the disclosure. Thus, effects and features of the second aspect of the disclosure are largely analogous to those described above in connection with the first aspect of the disclosure. Examples and embodiments mentioned in relation to the first aspect of the disclosure are largely compatible with the second aspect of the disclosure, and vice versa.

Typically, from a first time period between initiating the dumping procedure to that the predefined state has been reached, a first sub-part of the load is dumped, or discharged, from the dump body, typically to the ground or to a dumping site externally of the working machine. Thus, the sub-part of the load which is maintained in the dump body at the pre-defined state may be referred to as a second sub-part of the load and is equal to the initial load in the dump body with the first sub-part subtracted. During a second time period after reaching the predefined state, at least a portion of the second sub-part of the load is dumped, or discharged, from the dump body as the working machine is moved in the forward direction.

In some examples, the method comprises receiving, by the processor device, dumping initiation data, and in response to the received dumping initiation data, initiating the dumping procedure. A technical benefit may include usage of reliable data to initiate the dumping procedure and efficient handling and communication of data. The dumping initiation data may be referred to as a dumping signal. For example, a driver or operating personnel may, by a communicator, send the dumping initiation data to the processor device.

In some examples, initiating the dumping procedure, determining the dumping procedure has reached a predefined state, and instructing the working machine to move in a forward direction are performed in a consecutive, and automated, order without the need of any interaction of a driver or operating personnel. A technical benefit may include an efficient and automated dumping procedure of the working machine. In some examples, in response to that the predefined state of the dumping procedure is not achieved or identified, e.g. there is no sub-part of the load maintained in the dump body, the processor device does not instruct the working machine to move in the forward direction.

In some examples, the method comprises keeping, by the processor device, the dumping procedure in the predefined state for a predetermined time period prior to instructing the working machine to move in a forward direction. A technical benefit may include improved, or increased, dumping of the load in the predefined state. That is, with reference to the previously described first and second sub-parts of the load, the first sub-part of the load dumped, or discharged, can be increased at the benefit of having a decreased second sub-part of the load (i.e. the sub-part of the load maintained in the dump body at the predefined state at the end of the predetermined time period).

In some examples, the method comprises instructing, by the processor device, to release the brakes of the working machine in response to reaching the predefined state, or in response to that the predetermined time period has lapsed. A technical benefit may include an efficient and automated dumping procedure of the working machine. As the brakes of the working machine are released, the working machine may move in a forward direction when instructed to.

In some examples, instructing the working machine to move in a forward direction comprises applying a torque to the wheels of the working machine. That is, the processor device may instruct the driveline of the working machine to apply a torque to the wheels in order for the working machine to move in a forward direction. The torque may e.g. be a predefined torque.

In some examples, the method further comprises stopping, by the processor device, tilting of the dump body by bringing the tilting actuator to a predefined position prior to, or when, reaching the predefined state of the dumping procedure. A technical benefit may include improved control of the dumping procedure. In some examples, the predefined position of the tilting actuator is the end position of the tilting actuator. In other words, the predefined state of the dumping procedure may be reached as the tilting actuator reaches its end position.

In some examples, the method comprises identifying, by the processor device, a dump body condition as belonging to a group of predefined dump body conditions defined as load dumping restrictive, the load dumping being defined as restrictive by that said sub-part of the load is maintained in the dump body as the tilting actuator is arranged in the predefined position, and in response of identifying a dump body condition as load dumping restrictive, determining, by the processor device, that the dumping procedure has reached the predefined state. A technical benefit may include efficient determination of the predefined state of the dumping procedure. The predefined position of the tilting actuator may be, as described before, the end position of the tiling actuator. Thus, if the predefined state of the dumping procedure is not achieved or identified, e.g. there is no sub-part of the load maintained in the dump body as the tilting actuator is arranged in the predefined position, the processor device does not instruct the working machine to move in the forward direction. The sub-part maintained in the dump body in the restrictive dump body conditions may e.g. be defined as that maintained in the dump body for at least 10 seconds, or at least 15 seconds after the tilting actuator has reached the predefined position.

In some examples, the tilting actuator is arranged in the predefined position during instructing the working machine to move in a forward direction to discharge said sub-part of the load maintained in the dump body. A technical benefit may include improved control of the dumping procedure. Typically, the tilting actuator is arranged, or is fixed, in the predefined position during movement of the working machine in the forwards direction. Thus, as the tilting actuator is arranged in the predefined position during movement of the working machine, the dump body can be kept stable, and in a fixed position, during the movement of the working machine. As a further alternative, in some examples the method comprises continued tilting of the dump body during movement of the working machine the forward direction. That is, the tilting actuator may be prevented from being arranged, such as fixed, in the predefined position during instructing the working machine to move in a forward direction, or during movement of the working machine in the forwards direction.

In some examples, the method comprises ending, by the processor device, the dumping procedure by re-tilting the dump body by de-activating the tilting actuator. A technical benefit may include efficient and automated ending of the dumping procedure. Typically, as the tilting actuator is deactivated, the dump body is lowered towards the working machine frame, to finally rest against the working machine frame. The processor device may e.g. instruct the tilting actuator to deactivate, e.g. by sending instructions to open a valve or the like controlling the pressure in the tilting actuator.

In some examples, the method comprises determining, by the processor device, that the load has been dumped from the dump body during moving of the working machine in the forward direction. A technical benefit may include an improved dumping procedure. That is, as it is determined that the load has been dumped, or discharged, from the dump body, a main purpose of the dumping procedure is achieved. Stated differently, the method comprises determining, by the processor device, that said sub-part of the load which was maintained in the dump body at the predefined state of the dumping procedure, has been dumped from the dump body during moving of the working machine in the forward direction. For example, a sensor, such as a weight sensor, may be arranged to measure the weight of the load in the dump body, wherein the method comprises receiving, by the processor device, measured weight of the weight sensor, and in response to that the measured weight is lower than a predetermined weight threshold, determine that the there is no load in the dump body (i.e. that the load has been dumped from the dump body).

In some examples, the method comprises ending, by the processor device, the dumping procedure in response of determining that the load has been dumped from the dump body. A technical benefit may include efficient and automated ending of the dumping procedure. Hereby, that the load has been dumped, or discharged, from the dump body is verified before ending the dumping procedure.

In some examples, the method comprises identifying or receiving, by the processor device, dumping stopping data, and in response of identifying dumping stopping data ending the dumping procedure. A technical benefit may include usage of reliable data to stop the dumping procedure and efficient handling and communication of data. The dumping stopping data may be referred to as a stop signal. For example, a driver or operating personnel may, by a communicator, send the dumping stopping data to the processor device.

In some examples, the method comprises instructing, by the processor device, the working machine to stop subsequent to that the working machine has moved in a forward direction a predetermined distance. A technical benefit may include improved control of the dumping procedure. For example, the method may comprise ending, by the processor device, the dumping procedure in response of determining that the working machine has moved in a forward direction the predetermined distance. As previously described, ending may comprise re-tilting the dump body by de-activating the tilting actuator. Thus, the method may comprise determining, or identifying, by the processor device, that the working machine has moved in a forward direction the predetermined distance subsequent to instructing the working machine to move in a forward direction.

In some examples, the method comprises determining, by the processor device, the distance which the working machine has moved in the forward direction, and comparing, by the processor device, the determined distance with the predetermined distance. In response to that the determined distance is shorter than the predetermined distance, the method comprises instructing, by the processor device, the working machine to move, or keep moving, in the forward direction, and in response to that the determined distance is the same as, or longer than, the predetermined distance, the method comprises instructing, by the processor device, the working machine to stop. A technical benefit may include automated movement of the working machine in a forward direction the predetermined distance.

In some examples, the predefined state of the dumping procedure is defined by the angle of inclination of the dump body, or of the weight of the load in the dump body. A technical benefit may include efficient determination of the predefined state of the dumping procedure. For example, a sensor, such as an inclination sensor and/or a weight sensor, may be arranged to measure the inclination of the dump body and the weight of the load in the dump body. In some examples, the method comprises receiving, by the processor device, measured inclination by the inclination sensor, and/or measured weight by the weight sensor, and in response to that the measured inclination is higher than a predetermined inclination threshold, determine that the predefined state of the dumping procedure is reached, and/or in response to that the measured weight is lower than a predetermined weight threshold, or a first predetermined weight threshold (typically different to the previously mentioned predetermined weight threshold, which may be referred to as a second predetermined weight threshold), determine that the predefined state of the dumping procedure is reached. In some examples, the predefined state of the dumping procedure is defined by the position of the tilting actuator.

According to a third aspect of the disclosure, a dumping arrangement for a working machine having a dump body for holding a load and a working machine frame for supporting the dump body is provided. The dumping arrangement comprises at least one tilting actuator connecting the working machine frame and the dump body, and a control unit configured to:
- initiate a dumping procedure by tilting the dump body by activating the tilting actuator in order to discharge at least a part of the load from the dump body,
- determine that the dumping procedure has reached a pre-defined state at which a sub-part of the load is maintained in the dump body,
- instruct the working machine to move in a forward direction to discharge at least a portion of said sub-part of the load maintained in the dump body.

The third aspect of the disclosure may seek to solve the same problem as described for the first and second aspects of the disclosure. Thus, effects and features of the third aspect of the disclosure are largely analogous to those described above in connection with the first and second aspects of the disclosure. Examples and embodiments mentioned in relation to the first and second aspects of the disclosure are largely compatible with the third aspect of the disclosure, and vice versa.

In some example, the dumping arrangement comprises an inclination sensor and/or a weight sensor configured to provide measured inclination of the dump body and the weight of the load in the dump body, wherein the control unit is configured to use the received measured inclination and/or measured weight to determine that the predefined state of the dumping procedure has been reached. A technical benefit may include usage of reliable inclination and weight measurements and efficient handling and communication of data.

In some examples, the dumping arrangement comprises the dump body. In some examples, the dump body as a flat bottom. That is, the flat bottom supports the load in the dump body. The control unit is preferably configured to control, and instruct, the propulsion system of the working machine (in order to instruct the working machine to move in a forward direction), and the brakes or brake system of the working machine (in order to release or apply the brakes).

According to a fourth aspect of the disclosure, a working machine comprising the processor device to perform the method of the second aspect of the disclosure, or comprising the dumping arrangement of the third aspect of the disclosure, is provided. The processor device may e.g. be that of the first aspect of the disclosure. The working machine is preferably a dumper, a dump truck or an articulated hauler. The working machine is preferably an electric vehicle.

According to a fifth aspect of the disclosure, a computer program product comprising program code for performing, when executed by the processor device, the method of the second aspect of the disclosure is provided.

According to a sixth aspect of the disclosure, a control system comprising one or more control units configured to perform the method of the second aspect of the disclosure is provided.

According to a seventh aspect of the disclosure, a non-transitory computer-readable storage medium comprising instructions, which when executed by the processor device, cause the processor device to perform the method of the second aspect of the disclosure is provided.

The fourth to seventh aspects of the disclosure may seek to solve the same problem as described for the first to third aspects of the disclosure. Thus, effects and features of the fourth to seventh aspects of the disclosure are largely analogous to those described above in connection with the first to third aspects of the disclosure.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**Fig. 1** is an exemplary perspective view of a working machine having a dump body for holding a load and working machine frame for supporting the dump body, the working machine comprising a dumping arrangement according to one example.
**Figs. 2A and 2B** show parts of a load dumping procedure of the working machine of Fig. 1 according to one example.
**Fig. 3** is a flowchart illustrating the steps of a method in according to one example.
**Fig. 4** is a schematic diagram of an exemplary computer system for implementing examples disclosed herein, according to one example.

### DETAILED DESCRIPTION

Aspects set forth below represent the necessary information to enable those skilled in the art to practice the disclosure. The object of the present inventive concept is to solve the problem relating to maintained, or remained, parts of the load in the dump body after a dumping procedure, and to provide an improved control of the dumping procedure. The inventive concept solves the problem by, inter alia, determine that the dumping procedure has reached a pre-defined state at which a sub-part of the load is maintained in the dump body, and instruct the working machine to move in a forward direction to discharge at least a portion of said sub-part of the load maintained in the dump body. Hereby, an improved dumping procedure with less, or no, parts of the load maintained, or remained in the dump body may be achieved.

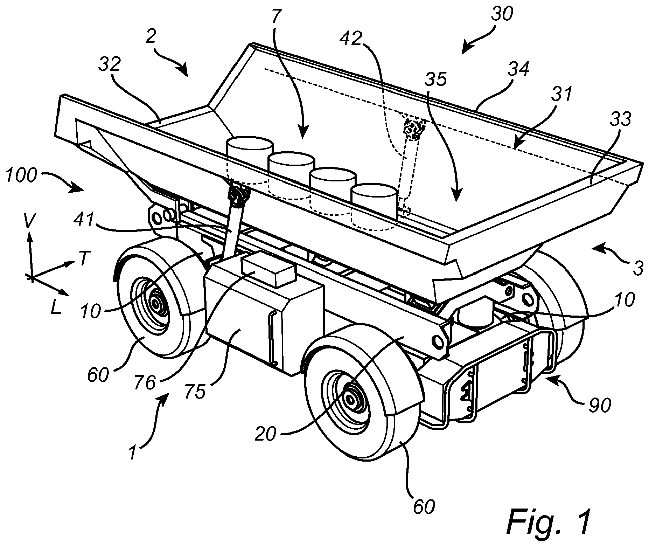

**FIG. 1** shows an exemplary working machine in the form of a dumper 1. The dumper 1 is an electric vehicle, such as a full electric vehicle or a hybrid, comprising a powertrain having an electric driveline comprising a rechargeable energy storage system, RESS, including at least one battery pack 75, and a at least one electrical engine or machine 90 powered by the battery pack 75. The dumper 1 may be an autonomously operated dumper 1 as described below.

The dumper 1 comprises a dump body 30 for holding a load 7 and a working machine frame 20 for supporting the dump body 30. As seen in Fig. 1 the dump body 30 may be a loading platform of the dumper 1. The dumper 1 is adapted to be arranged in a load receiving condition in which the dump body 30 comprises an open load receiving area 31 outwardly delimited by a load receiving area circumference 34. The open load receiving area 31 is typically delimited in the vertical direction by a bottom 35 of the dump body 30. The bottom 35 is preferably a flat bottom. In Fig. 1, an example is shown where the dumper 1 is adapted to assume the load receiving condition in a normal state. In other words, the dumper 1 exemplified in Fig. 1 comprises a dump body 30 which always comprises an open load receiving area 31 outwardly delimited by a load receiving area circumference 34. However, it is also envisioned that embodiments of the dumper 1 (or working machine) may comprise cover means (not shown), such as a lid, that is adapted to cover at least a portion of the dump body 30 and which cover means can be moved in order to obtain the open load receiving area 31. Generally, the open load receiving area 31 may be an area that is directly accessible from the environment surrounding the dumper 1. For instance, the open load receiving area 31 may be an area that is directly accessible from the above of the dump body 30. The load receiving area circumference 34 may form a closed loop that fully encloses a continuously open load receiving area 31.

The dumper 1 exemplified in Fig. 1 does not have a driver seat, but is intended to be autonomously and/or remotely operated. The dumper 1 further comprises a load dumping side 2 and an opposite side which herein referred to as the opposite side 3. The opposite side 3 may be used as a front end side when the dumper 1 is driven in the direction that puts the opposite side 3 first. However, the dumper 1 may be drivable in any direction, i.e. it may be bidirectional. Further, the dump body 30 comprise a load dumping end portion 32 arranged on the load dumping side 2, and an opposite end portion 33 arranged on the opposite side 3. The load dumping end portion 32 may comprise, or consist of, a beveled edge having an extension in the vertical direction which is smaller than that of the opposite end portion 33. Hereby, dumping of the load 7 at the load dumping side 2 may be facilitated. As is also clearly shown in Fig. 1, the dumper 1 extends in at least a longitudinal direction L, a vertical direction V and a transversal direction T. The longitudinal direction L is parallel to an intended direction of travel of the dumper 1. The transversal direction T is perpendicular to each one of the vertical direction V and the longitudinal direction L. These directions are intended to be interpreted relative to the dumper 1, and should not be interpreted as being dependent of the vehicle's orientation.

The working machine frame 20 supports the dump body 30, and thereby carries the load of anything contained in the dump body 30 as well as the weight from the dump body itself. Further, a pair of propulsion axles 10 may be mounted onto the working machine frame 20. The propulsion axles 10 may be equipped with propulsion hubs for driving the wheels 60. Other propulsion means than wheels 60 are conceivable, e.g. crawlers.

Further, the dumper 1 may comprise an electrical engine 90 coupled to the propulsion axles 10 via a drive shaft (not shown). The electrical engine 90 may be mounted onto a front side of the dumper 1. The dumper 1 may comprise one electrical engine on each propulsion axle 10, or comprise one electrical engine in each one of the four wheels 60 (e.g. integrated into the hubs of the wheels 60). Any electrical engine may be referred to as a traction electric machine.

The dumper 1 comprises a dumping arrangement 100 comprising at least one tilting actuator 41, 42. The dumper 1 of Fig. 1 typically comprises at least two tilting actuators 41, 42, such as hydraulic actuators, being a first tilting actuator 41 arranged on a first longitudinal side of the dumper 1, and a second tilting actuator 42 (shown hidden behind the dump body 30) on a second longitudinal side of the dumper 1, the second longitudinal side being opposite to the first longitudinal side. Each one of the tilting actuators 41, 42 connects the working machine frame 20 (on one end) and the dump body 30 (on an opposite end) such that the dump body 30 can be tilted relative to the working machine frame 20 upon activation of the tilting actuators 41, 42, and to discharge the load 7 at the load dumping side 2.

The dumper 1 comprises a control unit 76 configured to initiate a dumping procedure by tilting the dump body 30 by activating the tilting actuators 41, 42 in order to discharge at least a part of the load 7 from the dump body 30. The control unit 76 may additionally be configured to receive a remote control signal to enable the dumper 1 to be remotely controlled. Such a signal may be received from an external transmission unit (not shown). It may further be capable of communicating any information to or from the dumper 1 from or to a remote server (not shown). Such information may comprise usage data, service information, battery status, load, weight, capacity utilization, etcetera.

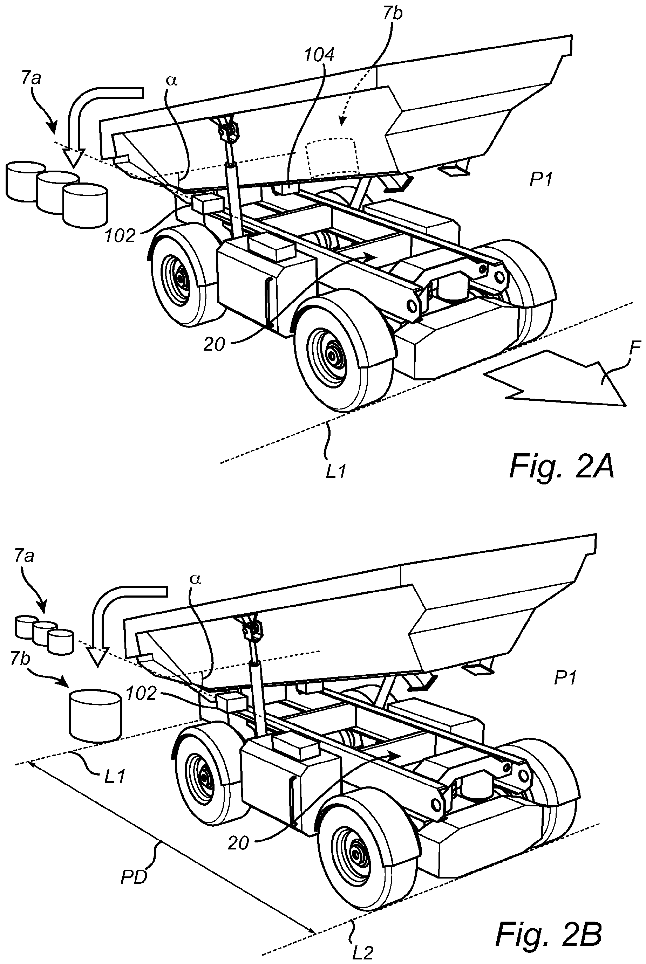

In **Fig. 2A****,** a first sub-part 7a of the load is dumped, or discharged, from the dump body 7, typically to the ground or to a dumping site externally of the dumper 1, as the dump body 30 has be tilted by the tilting actuators 41, 42 (i.e. lifted in one end by the tilting actuators 41, 42), such that the first sub-part 7a is dumped at the load dumping side 2. In Fig. 2A, the tilting actuators 41, 42 have been brought to a predefined position P1 corresponding to a predetermined inclination a of the dump body 30. At such predefined position P1, a second sub-part 7b of the load 7 is maintained in the dump body 30, e.g. as a result of that the bottom of the dump body 30 is flat, or due to the beveled edge 32, shown in Fig. 1. This state of the dumping procedure is an example of a pre-defined state of the dumping procedure in which a sub-part, i.e. the second sub-part 7b, of the load 7 is maintained in the dump body 30.

The control unit 76 is configured to determine that the dumping procedure has reached the pre-defined state, e.g. by identifying predefined position P1 of the titling actuators 41, 42. Moreover, the dumping arrangement 100 may comprises at least one of an inclination sensor 102 and a weight sensor 104. The inclination 102 sensor is configured to measure the inclination α of the dump body 30 and the weight sensor 104 is configured to measure the weight of the load 7, 7a, 7b in the dump body 30. Thus, the control unit 76 may be configured to receive measured inclination α of the dump body 30 by the inclination sensor 102, and/or measured weight of the load 7, 7a, 7b in the dump body 30 by the weight sensor 104. The control unit 76 may be configured to, in response to that the measured inclination α is higher than a predetermined inclination threshold, determine that the predefined state of the dumping procedure has been reached. Additionally, or alternatively, the control unit 76 may be configured to, in response to that the measured weight is lower than a predetermined weight threshold (or first predetermined weight threshold), determine that the predefined state of the dumping procedure has been reached. Thus, instead of, or as an alternative to, determining that the dumping procedure has reached the pre-defined state by the position of the titling actuators 41, 42, the predefined state may be determined to be reached by the control unit 76 in response to the angle of inclination α of the dump body 30, or of the weight of the load 7a in the dump body 30.

The control unit 76 is configured to instruct the dumper 1 to move in a forward direction F to discharge at least a portion of said sub-part 7b of the load 7 maintained in the dump body 30 (i.e. the second sub-part 7b of the load 7). For example, the control unit 76 may instruct the dumper 1 to move in the forward direction F in response to that the dumping procedure has reached the pre-defined state. The control unit 76 may e.g. be configured to release the brakes of the wheels 60 of the dumper 1, and to apply a predetermined torque to the wheels 60 to make the dumper 1 move in the forward direction F, typically by instructing the electrical engine(s) 90 of the dumper 1. The control unit 76 may control the movement of the dumper 1 in the forward direction F.

The control unit 76 may control the movement of the dumper 1 such that it is moved in a forward direction F a predetermined distance PD. That is, prior to that the dumper 1 is moved in the forward direction F, it is arranged at a first location L1, e.g. by that the front wheels 60 of the dumper 1 is arranged at the first location L1, as shown in Fig. 2A. Subsequent to that the dumper 1 has moved the predetermined distance PD, the dumper is arranged at a second location L2 e.g. by that the front wheels 60 of the dumper 1 is arranged at the second location L2, as shown in **Fig. 2B****.** Thus, the predetermined distance PD is the distance from the second location L2 to the first location L 1.

As the dumper 1 move in the forward direction F, at least a portion of the sub-part 7b, e.g. the whole of said second sub-part 7b, of the load 7 maintained in the dump body 30 will be discharged as a result of the induced forced by the forward motion of the dumper 1, as shown in Fig. 2B. The tilting actuators 41, 42 may be arranged in the predefined position P1 during the movement of the dumper 1 in the forward direction F for improved control of the dumping procedure. As the dumper 1 has moved in the forward direction F the predetermined distance PD, the dumping procedure may be ended by re-tilting the dump body 30 by de-activating the tilting actuators 41, 42. For example, the dumping procedure may be ended in response of that the dumper 1 has moved the predetermined distance PD. Additionally, or alternatively, the dumping procedure may be ended in response of determining that the load 7, or second sub-part 7b of the load 7, has been dumped from the dump body 30.

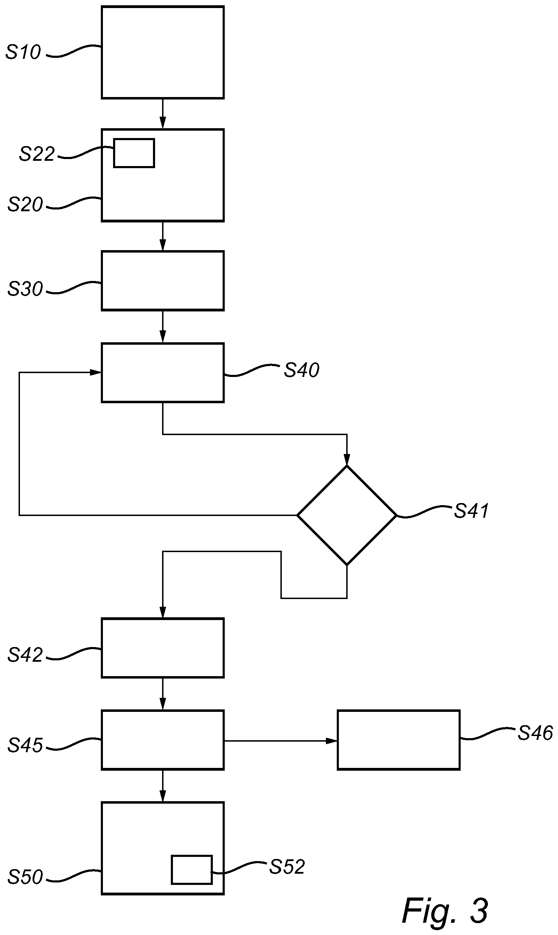

**FIG. 3** is a flow chart of a computer implemented method for controlling a dumping procedure of a working machine, such as a dumping procedure of the dumping arrangement 100 of the dumper 1 in Fig. 1, according to one example.

In a step S10, e.g. being a first step S10, a dumping procedure of a load is initiated by a processor device of a computer system, by tilting a dump body of a working machine by activating at least one tilting actuator connecting a working machine frame with the dump body. For example, and with reference to Fig. 1, the processor device may be comprised in the control unit 76 of the dumper 1, and the at least one tilting actuator is both, or one of, the tilting actuators 41, 42 of the dumping arrangement 100.

In a step S20, e.g. being a second step S20, that the dumping procedure has reached a predefined state at which a sub-part of the load is maintained in the dump body is determined by the processor device. For example, and with reference to Fig. 1, the dumping arrangement 100 may comprises at least one of an inclination sensor 102 and a weight sensor 104. In some examples, the predefined state of the dumping procedure is defined by the angle of inclination of the dump body, or of the weight of the load in the dump body. Step S20 may comprise to determine, by the processor device and in response to that a measured inclination is higher than a predetermined inclination threshold, determine that the predefined state of the dumping procedure has been reached, or determine, by the processor device and in response to that a measured weight is lower than a predetermined weight threshold (or first predetermined weight threshold), determine that the predefined state of the dumping procedure has been reached. As an alternative, the predefined state may be defined by that the predefined position of the actuator(s) has been reached.

In a step S40, e.g. being a third step S40, the working machine is instructed by the processor device to move in a forward direction to discharge at least a portion of said sub-part of the load maintained in the dump body. The step S40 may comprises determining, or identifying (or verifying) that the working machine is moved in the forward direction as instructed. In some examples, the step S40 comprises keeping the tilting actuator(s) arranged, or fixed, in the predefined position during movement of the working machine in the forward direction.

In an optional step S30, e.g. carried out in previously to step S40 tilting of the dump body is stopped by the processor device by bringing the tilting actuator to a predefined position prior to, or when, reaching the predefined state of the dumping procedure. Such predefined position P1 of the tilting actuators 41, 42 is e.g. shown in Fig. 2A.

In an optional step S22, e.g. carried out prior to step S30, a dump body condition is identified by the processor device as belonging to a group of predefined dump body conditions defined as load dumping restrictive. The load dumping restrictive condition is defined by that said sub-part of the load is maintained in the dump body as the tilting actuator is arranged in the predefined position. For example, as shown in Fig. 2, the second sub-part 7b of the load 7 is maintained in the dump body 30 as the tilting actuators 41, 42 are arranged in the predefined position P1. The identification of the dump body condition as load dumping restrictive may be used to determine, by the processor device, that the dumping procedure has reached the predefined state of step S20.

In an optional step S42, the working machine is instructed, by the processor device, to stop subsequent to that the working machine has moved in a forward direction a predetermined distance. That is, the working machine is instructed to stop moving in the forward direction. The step S42 may be preceded by a decision-making step S41 in which the distance which the working machine has moved in the forward direction is compared, by the processor device, with the predetermined distance. In response to that the determined distance is shorter than the predetermined distance, the method returns to step S40 of instructing the working machine to move in the forward direction. In response to that the determined distance is the same as, or longer than, the predetermined distance, the method moves on to step S42 of stopping the working machine.

In an optional step, S50, the dumping procedure is ended, by the processor device, by re-tilting S52 the dump body by de-activating the tilting actuator(s).

In an optional step S45, that the load, or second sub part of the load, has been dumped from the dump body during moving of the working machine in the forward direction is determined by the processor device. For example, step S45 may comprises comparing the weight of the load in the dump body with a predetermined weight threshold, or second predetermined weight threshold. In response to that the determined weight is lower than the second predetermined weight threshold, the method may move on to the step S50 of ending, by the processor device, the dumping procedure in response of determining that the load has been dumped from the dump body. As an alternative, the method may move on to step S42 of stopping the working machine to move in the forward direction for embodiments in which the optional step S45 is carried out subsequently to step S40, but prior to optional step S42. In response to that the determined weight is higher than the second predetermined weight threshold, the method may comprise a step S46 of instructing the driver or operating personnel that the dumping of the load could not be fully completed, or the method may return to step S40 of instructing the working machine to move in the forward direction.

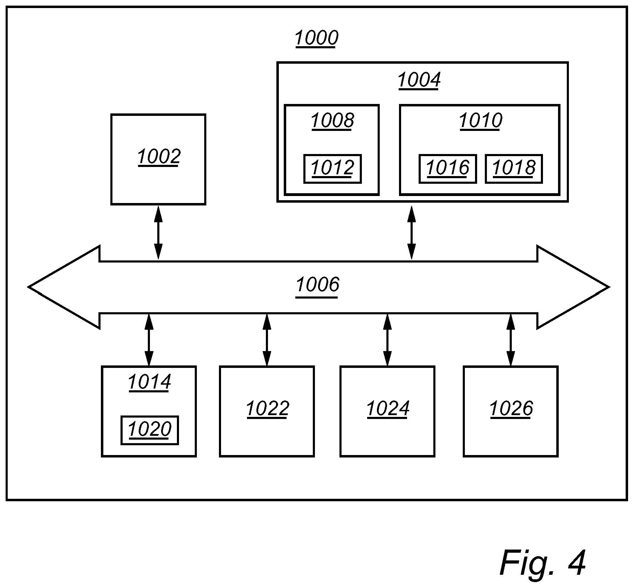

The control unit 76 of Fig. 1 may be configured to perform the method as described with reference to Fig. 3. The method as described with reference to Fig. 3 may thus be implemented in a computer program product comprising program code for performing, when executed by the processor device, the method described with reference to Fig. 3. Alternatively the method as described with reference to Fig. 3 may be implemented in a non-transitory computer-readable storage medium comprising instructions, which when executed by the processor device, cause the processor device to perform the method as described with reference to Fig. 3. Thus, the control unit 76 may comprise instructions to cause the dumping arrangement 100 to be operated according to at least some of the steps described with reference to Fig. 3. The control unit 76 of the dumper 1 of Fig. 1 may constitute, or be comprised in, a control system comprising one or more control units configured to perform the method as described with reference to Fig. 3. Such control system 1000 is now described with reference to Fig. 4.

**FIG. 4** is a schematic diagram of a computer system 1000 for implementing examples disclosed herein, e.g. the method as described with reference to Fig. 3. The computer system 1000 is adapted to execute instructions from a computer-readable medium to perform these and/or any of the functions or processing described herein. The computer system 1000 may be connected (e.g., networked) to other machines in a LAN, an intranet, an extranet, or the Internet. While only a single device is illustrated, the computer system 1000 may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include a processor device 1002 (may also be referred to as a control unit), a memory 1004, and a system bus 1006. The computer system 1000 may include at least one computing device having the processor device 1002. The system bus 1006 provides an interface for system components including, but not limited to, the memory 1004 and the processor device 1002. The processor device 1002 may include any number of hardware components for conducting data or signal processing or for executing computer code stored in memory 1004. The processor device 1002 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processor device 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with a processor device 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program product 1020 stored on a transitory or non-transitory computer-usable or computer-readable storage medium (e.g., single medium or multiple media), such as the storage device 1014, which includes complex programming instructions (e.g., complex computer-readable program code) to cause the processor device 1002 to carry out the steps described herein. Thus, the computer-readable program code can comprise software instructions for implementing the functionality of the examples described herein when executed by the processor device 1002. The processor device 1002 may serve as a controller or control system for the computer system 1000 that is to implement the functionality described herein.

The computer system 1000 also may include an input device interface 1022 (e.g., input device interface and/or output device interface). The input device interface 1022 may be configured to receive input and selections to be communicated to the computer system 1000 when executing instructions, such as from a keyboard, mouse, touch-sensitive surface, etc. Such input devices may be connected to the processor device 1002 through the input device interface 1022 coupled to the system bus 1006 but can be connected through other interfaces such as a parallel port, an Institute of Electrical and Electronic Engineers (IEEE) 1394 serial port, a Universal Serial Bus (USB) port, an IR interface, and the like. The computer system 10100 may include an output device interface 1024 configured to forward output, such as to a display, a video display unit (e.g., a liquid crystal display (LCD) or a cathode ray tube (CRT)). The computer system 1000 may also include a communications interface 1026 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence. Thus, it should be noted that the naming of the steps not necessarily, but might according to at least one example, relate to the order in which the steps are carried out.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system comprising a processor device configured to:
- initiate a dumping procedure of a load by tilting a dump body of a working machine by activating at least one tilting actuator connecting a working machine frame with the dump body,
- determine that the dumping procedure has reached a pre-defined state at which a sub-part of the load is maintained in the dump body,
- instruct the working machine to move in a forward direction to discharge at least a portion of said sub-part of the load maintained in the dump body.

2. A computer-implemented method, comprising:
- initiating (S10), by a processor device of a computer system, a dumping procedure of a load (7) by tilting a dump body (30) of a working machine (1) by activating at least one tilting actuator (41) connecting a working machine frame (20) with the dump body,
- determining (S20), by the processor device, that the dumping procedure has reached a predefined state at which a sub-part (7b) of the load (7) is maintained in the dump body,
- instructing (S40), by the processor device, the working machine to move in a forward direction (F) to discharge at least a portion of said sub-part of the load maintained in the dump body.

3. The method of claim 2, further comprising:
- stopping (S30), by the processor device, tilting of the dump body by bringing the tilting actuator to a predefined position (P1) prior to, or when, reaching the predefined state of the dumping procedure.

4. The method of claim 3, further comprising:
- identifying (S22), by the processor device, a dump body condition as belonging to a group of predefined dump body conditions defined as load dumping restrictive, the load dumping being defined as restrictive by that said sub-part of the load is maintained in the dump body as the tilting actuator is arranged in the predefined position, and
- in response of identifying a dump body condition as load dumping restrictive, determining, by the processor device, that the dumping procedure has reached the predefined state.

5. The method of any of claims 2-3, wherein the tilting actuator is arranged in the predefined position during instructing the working machine to move in a forward direction to discharge said sub-part of the load maintained in the dump body.

6. The method of any of claims 2-5, further comprising:
- ending (S50), by the processor device, the dumping procedure by re-tilting (S52) the dump body by de-activating the tilting actuator.

7. The method of any of claims 2-5, further comprising:
- determining (S45), by the processor device, that the load has been dumped from the dump body during moving of the working machine in the forward direction.

8. The method of claims 6 and 7, further comprising:
- ending (S50), by the processor device, the dumping procedure in response of determining (S45) that the load has been dumped from the dump body.

9. The method of any of claims 2-8, further comprising:
- instructing (S42), by the processor device, the working machine to stop subsequent to that the working machine has moved in a forward direction a predetermined distance.

10. The method of any of claims 2-9, wherein the predefined state of the dumping procedure is defined by the angle of inclination (α) of the dump body, or of the weight of the load in the dump body.

11. A dumping arrangement (100) for a working machine (1) having a dump body (30) for holding a load (7) and working machine frame (20) for supporting the dump body, the dumping arrangement comprising at least one tilting actuator (41) connecting the working machine frame and the dump body, and a control unit (76) configured to:
- initiate a dumping procedure by tilting the dump body by activating the tilting actuator in order to discharge at least a part (7b) of the load from the dump body,
- determine that the dumping procedure has reached a pre-defined state at which a sub-part (7b) of the load is maintained in the dump body,
- instruct the working machine to move in a forward direction to discharge at least a portion of said sub-part of the load maintained in the dump body.

12. A working machine comprising the processor device to perform the method of any of claims 2-10, or the dumping arrangement of claim 11.

13. A computer program product comprising program code for performing, when executed by the processor device, the method of any of claims 2-10.

14. A control system comprising one or more control units configured to perform the method of any of claims 2-10.

15. A non-transitory computer-readable storage medium comprising instructions, which when executed by the processor device, cause the processor device to perform the method of any of claims 2-10.
